# EUROPEAN PATENT APPLICATION

(11) **EP 4 570 562 A1**
(43) Date of publication of application: **18.06.2025**
(21) Application number: 23315452.5
(22) Date of filing: 14.12.2023
(51) Int. Cl.: B60L 1/00, B60L 8/00, B60L 50/51, B60L 50/75, B60L 58/40, B60L 50/71

(54) **HYBRID SYSTEM AND INTERVENTION SET**

(71) Applicant: H2X Ecosystems, 35170 Bruz (FR)
(72) Inventor: Paul, Stéphane, 29200 BREST (FR); Fleureau, Jean-Luc, 29460 DAOULAS (FR)
(74) Representative: Yes My Patent

(57) **Abstract**

The invention concerns a hybrid system (1), comprising at least: a body (10); a hydrogen fuel cell; a battery pack electrically connected to the hydrogen fuel cell; wherein the hybrid system (1) further comprises: an electrical panel (40) that is electrically connected to the battery pack and that includes at least one electrical outlet, and an electric inverter located between the battery pack and the electrical panel. The invention further concerns an intervention set comprising such a hybrid system and at least one mobile device.

## Description

### TECHNICAL FIELD OF THE.INVENTION

The invention concerns a hybrid system, comprising a hydrogen fuel cell, a battery pack, an electric panel, and an electric inverter. The hybrid system can be mobile or stationary.

The invention also concerns an intervention set, comprising a hybrid system and at least one mobile device.

### BACKGROUND OF THE INVENTION

Nowadays, it is known to design vehicles as hybrid systems, with different energy sources powering the engine. FR3059833 discloses such a vehicle, in particular its heat control solution.

Besides, it is known to design stationary stations as hybrid systems.

### SUMMARY OF THE INVENTION

The aim of the invention is to provide an improved hybrid system.

To this end, the invention concerns a hybrid system, comprising at least:
- a body;
- a hydrogen fuel cell;
- a battery pack electrically connected to the hydrogen fuel cell;
wherein the hybrid system further comprises:
- an electrical panel that is electrically connected to the battery pack and that includes at least one electrical outlet, and
- an electric inverter located between the battery pack and the electrical panel.

Thanks to the invention, the hybrid system operates as a versatile electric generator. Its power source can be the hydrogen fuel cell or the battery pack, depending on the situation. The electric outlet(s) can have various uses, in particular charging electric devices.

According to further aspects of the invention which are advantageous but not compulsory, such a hybrid system may incorporate one or several of the following features:
- The electrical panel includes several electrical outlets.
- The electrical panel includes an emergency stop button.
- The electrical panel includes a switch.
- The electrical panel is mounted on the body.
- The electrical panel includes a frame supporting the electrical outlet and mounted on the body.
- The hybrid system comprises two electrical panels, preferably mounted on opposite sides of the body.
- The hydrogen fuel cell is supplied by at least one hydrogen cartridge, movable in and out of the body.
- The hybrid system is configured to receive a single hydrogen cartridge.
- The hybrid system is configured to receive several hydrogen cartridges.
- The hybrid system is provided with solar panels connected to the battery pack.
- The hybrid system is configured as a stationary system.
- The hybrid system is configured as a vehicle, wherein the body is provided with displacement means, such as wheels, tracks, etc.

The invention also concerns an intervention set comprising a hybrid system as described here-above and at least one mobile device.

According to further aspects of the invention which are advantageous but not compulsory, such an intervention set may incorporate one or several of the following features:
- The mobile device is a drone, that is a remotely operated flying object.
- The mobile device is a robot, for example, a quadruped, crawler, or rolling robot.
- The mobile device is provided with sensors, for example for CBRN risk assessment.

### BRIEF DESCRIPTION OF THE DRAWINGS

The invention will now be explained in correspondence with the annexed figures, and as an illustrative example, without restricting the object of the invention. In the annexed figures:
- figure 1 is a front view of a hybrid system according to the invention, configured as a vehicle;
- figure 2 is a side view of the vehicle of figure 1;
- figure 3 is a longitudinal sectional view of the vehicle of figure 1;
- figure 4 is front view at a larger scale of the electrical panel equipping the vehicle of figures 1 to 3;
- figure 5 is a perspective view at a larger scale of the vehicle of figures 1 to 3, without its body, fuel cell, and cartridge.

### DETAILED DESCRIPTION OF SOME EMBODIMENTS

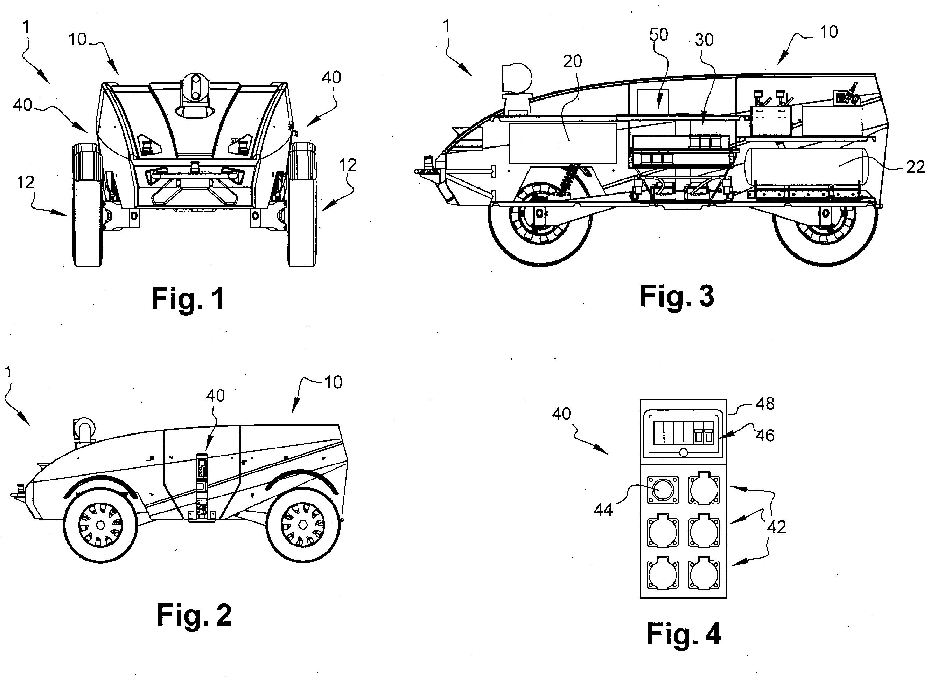

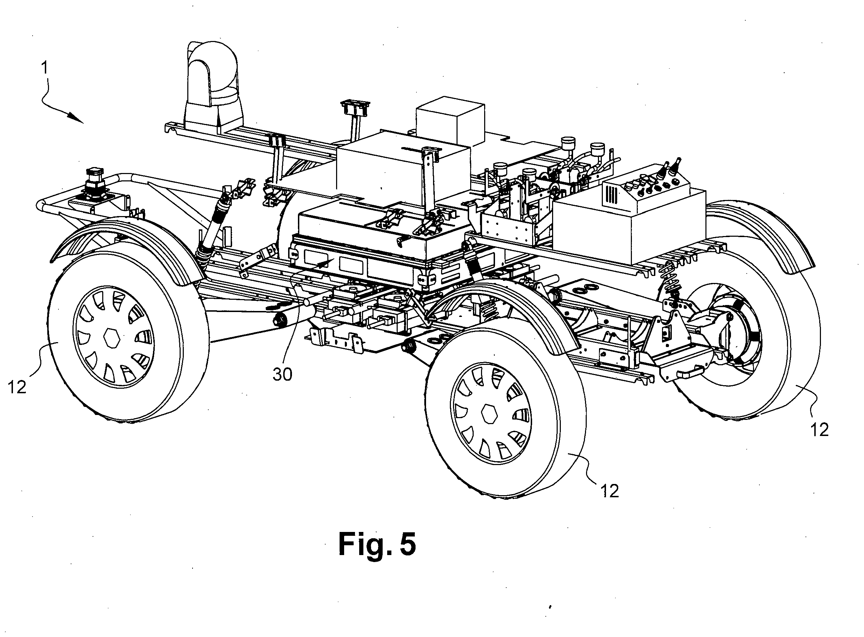

Figures 1 to 5 show a hybrid system (1) according to the invention, configured as a vehicle.

The system (1) comprises a body (10) provided with four wheels (12). Inside the body (10), the system (1) comprises a hydrogen fuel cell (20) and a battery pack (30) electrically connected to the hydrogen fuel cell (20). The hydrogen fuel cell (20) is supplied by a hydrogen cartridge (22), movable in and out of the body (10), at the rear of the system (1).

Advantageously, the fuel cell (20) is located at the front, the cartridge (22) is located at the back, and the battery pack (30) is located at the center of the system (1). Thus, the system has a good balance.

In a preferred embodiment, each wheel (12) is driven by its electric motor, powered by the battery pack (30). Each wheel (12) is independent in position, braking, drive.

Outside the body (10), the system (1) comprises two electrical panels (40), mounted on the lateral sides of the body (10). Each panel (40) is electrically connected to the battery pack (30) via an inverter (50), located between the battery pack (30) and the panels (40), inside the body (10). Each panel (40) includes several electrical outlets (42) for connecting electrical devices. Each electrical panel (40) includes an emergency stop button (44), two switches (46), and a frame (48). The frame (48) supports the other elements (42, 44, 46) and is mounted on the body (10).

According to a particular application, the system (1) can form an intervention set, in combination with at least one mobile device, not shown in the figures. The mobile device can be a drone, a robot, for example, a quadruped, crawler, or rolling robot, or any other mobile device. The mobile device can be provided with sensors, for example for CBRN risk assessment.

Other non-shown embodiments can be implemented within the scope of the invention.

According to a non-shown embodiment, the system (1) can comprise a single electrical panel (40), or more than two electrical panels (40).

According to another non-shown embodiment, the panel (1) can comprise a single outlet (42).

According to another non-shown embodiment, the system (1) can be provided with solar panels connected to the battery pack (30).

According to another non-shown embodiment, the system (1) can be provided with other displacement means, different from wheels, such as tracks.

According to another non-shown embodiment, the system (1) can be configured as a stationary system.

In addition, technical features of the different embodiments can be, in whole or part, combined with each other. Thus, the system (1) and can be adapted to the specific requirements of the application.

## Claims

1. Hybrid system (1), comprising at least:
- a body (10);
- a hydrogen fuel cell (20);
- a battery pack (30) electrically connected to the hydrogen fuel cell (20);
wherein the hybrid system (1) further comprises:
- an electrical panel (40) that is electrically connected to the battery pack (30) and that includes at least one electrical outlet (42), and
- an electric inverter (50) located between the battery pack (30) and the electrical panel (40).

2. Hybrid system (1) according to claim 1, wherein the electrical panel (40) includes several electrical outlets (42).

3. Hybrid system (1) according to any one of the previous claims, wherein the electrical panel (40) includes an emergency stop button (44).

4. Hybrid system (1) according to any one of the previous claims, wherein the electrical panel (40) includes a switch (46).

5. Hybrid system (1) according to any one of the previous claims, wherein the electrical panel (40) is mounted on the body (10).

6. Hybrid system (1) according to any one of the previous claims, wherein the electrical panel (40) includes a frame (48) supporting the electrical outlet (42) and mounted on the body (10).

7. Hybrid system (1) according to any one of the previous claims, comprising two electrical panels (40), preferably mounted on opposite sides of the body (10).

8. Hybrid system (1) according to any one of the previous claims, wherein the hydrogen fuel cell (20) is supplied by at least one hydrogen cartridge (22), movable in and out of the body (10).

9. Hybrid system (1) according to any one of the previous claims, wherein the hybrid system (1) is provided with solar panels (32) connected to the battery pack (30).

10. Hybrid system (1) according to any one of the previous claims 1 to 9, configured as a stationary system.

11. Hybrid system (1) according to any one of the previous claims 1 to 9, configured as a vehicle, wherein the body (10) is provided with displacement means (12), such as wheels, tracks, etc.

12. An intervention set comprising a hybrid system according to any one of claims 1 to 11 and at least one mobile device.

13. Intervention set according to claim 12, wherein the mobile device is a drone.

14. Intervention set according to claim 12, wherein the mobile device is a robot, for example, a quadruped, crawler, or rolling robot.

15. Intervention set according to any one of claims 12 to 14, wherein the mobile device is provided with sensors, for example for CBRN risk assessment.
